# EUROPÄISCHE PATENTSCHRIFT

(11) **EP 0 286 878 B1**
(45) Veröffentlichungstag und Bekanntmachung des Hinweises auf die Patenterteilung: **02.06.1993**
(21) Anmeldenummer: 88104668.4
(22) Anmeldetag: 23.03.1988
(51) Int. Cl.: B60P 3/42, B62D 33/06, B62D 53/02

(54) **Universalarbeitsfahrzeug**
All-purpose utility vehicle
Véhicule utilitaire universel

(30) Priorität: 13.04.1987 DE 3712553
(43) Veröffentlichungstag der Anmeldung: 19.10.1988
(73) Patentinhaber: FAUN GmbH, D-91233 Neunkirchen (DE)
(72) Erfinder: Krob, Adolf, Dipl.-Ing., D-5503 Konz-Niedermennig (DE); Kirchen, Franz-Albert, Dipl.-Ing., D-5511 Ockfen (DE)
(74) Vertreter: Rau, Manfred, Dr. Dipl.-Ing.

(56) Entgegenhaltungen:
- DE-A- 1 943 611
- DE-A- 1 963 494
- DE-A- 3 425 838
- FR-A- 2 531 116
- GB-A- 1 023 175
- US-A- 3 963 132

## Beschreibung

Die Erfindung betrifft ein Universalarbeitsfahrzeug nach dem Oberbegriff des Anspruches 1.

Aus der US-A-3 963 132 ist ein primär als Erdbewegungsmaschine ausgebildetes Arbeitsfahrzeug mit den Merkmalen des Oberbegriffes des Anspruches 1 bekannt. Hierbei kann die Fahrerkabine um 180° aus einer Verfahr- in eine Arbeitsstellung verschwenkt werden. In der Verfahrstellung sitzt der Fahrer in Fahrtrichtung, während er in der Arbeitsstellung in Blickrichtung auf das Arbeitsgerät sitzt.

Weiterhin sind Universalarbeitsfahrzeuge mit einem Vorderwagenteil und einem Hinterwagenteil, wobei zumindest an dem Vorderwagenteil ein Arbeitsgerät anbringbar ist, in verschiedenen Ausgestaltungen bekannt. Beispielsweise ist ein solches Universalarbeitsfahrzeug allgemein unter der geschützten Marke "Unimog" bekannt. Es ist in Starrahmenausführung als zweiachsiger Kleinlastwagen ausgebildet; im Bereich des Hinterwagenteiles oder vorn am Vorderwagenteil ist ein Arbeitsgerät anbringbar. Für bestimmte Arbeitsvorgänge sind mindestens zwei Bedienungspersonen erforderlich. Dies gilt beispielsweise für das Anbringen oder Abnehmen eines Arbeitsgerätes und das Arbeiten im Seitenbereich oder rückwärtigen Bereich, wenn hierzu das entsprechende Arbeitsgerät an einer der Fahrerseite gegenüberliegenden Seite anzubringen oder dorthin zu verschwenken ist oder wenn das Arbeitsgerät zum Arbeiten im rückwärtigen Bereich angebracht werden muß. Darüber hinaus wird die Größe des Arbeitsbereiches, insbesondere wenn das Arbeitsgerät ein Baggerarm oder dergleichen ist, als unbefriedigend empfunden.

Der Erfindung liegt die Aufgabe zugrunde, ein Universalarbeitsfahrzeug der gattungsgemäßen Art so auszugestalten und weiterzubilden, daß bei möglichst großem Wirkungsbereich eine einfache Bedienbarkeit und Überschaubarkeit gegeben ist, wobei die anfallenden Tätigkeiten möglichst von einer Person durchführbar sein sollen.

Diese Aufgabe wird erfindungsgemäß bei einem Universalarbeitsfahrzeug nach dem Oberbegriff des Anspruches 1 durch die Merkmale im Kennzeichnungsteil des Anspruches 1 gelöst. Die erfindungsgemäße Anbringbarkeit des Arbeitsgerätes an der Fahrerkabine kombiniert mit der Drehbarkeit der Fahrerkabine ermöglicht es, das Arbeitsgerät während des Fahrbetriebes entgegen der Fahrtrichtung anzuordnen und lediglich beim Arbeitseinsatz in Fahrtrichtung. Dies ergibt sehr gute Sichtverhältnisse bei normalem Fahrbetrieb, auch wenn sperrige Arbeitsgeräte angebracht sind. Die darüberhinaus vorgesehene Drehbarkeit der Fahrerzentrale in der Fahrerkabine ermöglicht es dem Fahrer jeweils bezüglich der Arbeitsgerätschaft eine optimale Position einzunehmen. Bei Böschungsarbeiten, die bei langsamer Vorwärtsbewegung des Universalarbeitsfahrzeuges etwa durchgeführt werden, kann der Fahrer - bei nicht gedrehter Fahrerkabine - die Position "Links" beibehalten, wenn an einer in Fahrtrichtung linken Böschung gearbeitet wird, oder, bei gedrehter Fahrerkabine, die Position "Rechts" einnehmen, wenn an einer in Fahrrichtung rechten Böschung gearbeitet wird. Die weitere, kombinativ verwirklichte Maßnahme, daß das Arbeitsgerät an der Fahrerkabine angebracht ist, bedeutet, daß bei einer Verdrehung der Arbeitskabine das Arbeitsgerät mitdreht, also die Relativstellung zwischen der Bedienungsperson und dem Arbeitsgerät nicht verändert wird.

Gegenüber herkömmlichen Universalarbeitsfahrzeugen werden damit auch gesonderte, außerhalb der Fahrerkabine befindliche Betätigungseinrichtungen zur Betätigung eines Arbeitsgerätes überflüssig.

In Ausgestaltung der Erfindung ist weiter vorgesehen, daß das Antriebsteil und das Hängerteil über ein Knickgelenk miteinander verbunden sind. Diese Maßnahme gibt dem Universalarbeitsfahrzeug bei einfachem, kompakten Aufbau eine optimal große Beweglichkeit und Anpassungsfähigkeit an schwieriges Gelände. Das Universalarbeitsfahrzeug kann zweiachsig ausgebildet sein, weist bevorzugt einen Allradantrieb auf und kann in Sonderfällen auch mit einer Tandemachsanordnung versehen sein.

Von besonderer Problematik hinsichtlich der Bedienbarkeit und des zu treibenden Aufwandes ist bei bekannten Universalfahrzeugen die jeweilige Anbringung, Adaption, eines neuen Arbeitsgerätes. Hierzu schlägt die Erfindung vor, daß die Aufnahme einer Arbeitsgerätschaft auf dem Vorderwagenteil und/oder dem Hinterwagenteil durch eine Absenkung und Wiederanhebung durchführbar ist. Zusammen mit einer geeignet ausgebildeten Halterung an dem Wagenteil und einem geignet ausgebildeten Gegenhalterungsbereich an der Arbeitsgerätschaft kann der Fahrer so in einfacher Weise und ohne zusätzlich erforderliche Hilfe das betreffende Wagenteil, oder beide Wagenteile, absenken, unter die Arbeitsgerätschaft fahren und sodann das Wagenteil wieder anheben, wodurch die Arbeitsgerätschaft an dem Wagenteil angebracht ist.

Hierzu schlägt die Erfindung weiterhin in Kombination auch vor, daß das Vorderwagenteil und/oder das Hinterwagenteil hydropneumatisch gefedert sind. Die hydropneumatische Federung erlaubt in optimaler Weise die beschriebene Absenkung und Wiederanhebung des entsprechenden Fahrzeugteiles. Darüberhinaus erbringt die hydropneumatische Federung auch einen außerordentlich hohen Fahrkomfort, umabhängig von den Belastungen.

Eine derart kombinativ wirkende Maßnahme stellt auch das weiterhin vorgesehene Merkmal, ein hydrostatischer Antrieb, dar. Vorzugsweise verfügt das hier beschriebene Unlversalarbeitsfahrzeug über einen Dieselmotor. In Kombination mit dem hydrostatischen Antrieb, als automatisches Getriebe, ist eine stufenlose Geschwindigkeitsregelung möglich, unabhängig von der Drehzahl des Motors. Desgleichen ist in einfacher Weise eine Leistungsverzweigung möglich, zur Betätigung einer Arbeitsgerätschaft einerseits und zur Bewegung des Fahrzeuges andererseits. Gleichzeitig erleichtert auch der hydrostatische Antrieb entscheidend die Arbeit einer Bedienungsperson.

Bevorzugt ist eine offene Bauweise Vorgesehen, der Hydromotor gesondert, losgelöst angeordnet, wobei die notwendige Verbindung über Schläuche realisiert ist. Der Dieselmotor treibt, über eine Regelung, eine Pumpe an. Es ist eine Pumpe für den Fahrantrieb und für zusätzliche Agregate Vorgesehen. Weiterhin ist ein Lastschaltgetriebe vorgesehen.

Die genannten Merkmale ermöglichen ein automatisches Fahren, eine einfache Handhabung und insgesamt einen hohen Bedienungskomfort. Eine Fahrtrichtungsumkehr ist unter voller Last verschleißfrei durchführbar. Es erfolgt eine automatische Anpassung von Zugkraft und Fahrgeschwindigkeit an den jeweiligen Belastungszustand. Es ist eine Leistungsbegrenzung gegeben bei geringer Drehzahldrückung, auch beim Zuschalten von Nebenverbrauchern. Es erfolgt ein drehzahlabhängiger Aufbau der Zugkraft.

Es ist ein feinfühliges Manövrieren möglich, ein hohes Beschleunigungsvermögen gegeben und gleichzeitig auch ein Verschleißfreies Bremsen möglich.

Die Dieselmotorleistung kann optimal zwischen Fahrantrieb und Nebenverbrauchern aufgeteilt werden.

Besonders bevorzugt ist auch, daß der Dieselmotor, der hydrostatische Antrieb und das Lastschaltgetriebe im Hinterwagenteil angeordnet sind. Hiermit ist bei dem erfindungsgemäßen Universalarbeitsfahrzeug eine sehr gute Lastverteilung gegeben. Diese Anordnung ist auch vorteilhaft im Hinblick auf den Komfort des Fahrer-Arbeitsplatzes, da dieser von den üblichen Frequenzen und Schwingungen, die durch den Antrieb verursacht werden, nicht beaufschlagt ist. Bei dem erfindungsgemäßen Universalarbeitsfahrzeug ist der Antrieb auch in besonderer Weise schallgedämmt. Dadurch, daß der Antrieb im Hinterwagenteil angeordnet ist, steht genügend Raum zur Durchführung der Schalldämmungsmaßnahmen zur Verfügung.

In vorteilhafter Ausgestaltung bezüglich des Arbeitsgerätes ist darüber hinaus vorgesehen, daß das Arbeitsgerät an der Fahrerkabine seitlich verschiebbar anbringbar ist. Vorzugsweise stufenlos verschiebbar. Hiermit ist eine nochmalige Verbesserung hinsichtlich des mit einer Arbeitsgerätschaft erreichbaren Raumes Verbunden und gleichzeitig eine optimale Anpassbarkeit an gegebene Verhältnisse.

Bevorzugt und in Kombination vorgesehen ist darüberhinaus, daß das Arbeitsgerät an der Fahrerkabine etwa um 180 ° verschwenkbar ist.

Im einzelnen ist hinsichtlich der Drehbarkeit der Fahrerkabine vorgesehen, daß diese ca. um 400° drehbar ist. So sind auch Tätigkeiten mühelos durchführbar, bei denen eine volle 360°-Umdrehung öfter kurzzeitig überschritten werden muß, ohne daß jeweils zunächst wieder vollständig die Fahrerkabine zurückgedreht werden muß.

Hinsichtlich der Fahrerzentrale, welche alle Fahr-,Bedien-und Sichtelemente einschließt, ist eine Drehbarkeit, innerhalb der Kabine, um 180° vorgesehen. Insgesamt ergeben sich so jeweils optimale Sicht-und Arbeitsverhältnisse bzgl. der unterschiedlichsten, mit dem Universalarbeitsfahrzeug durchführbaren Arbeiten.

Wenn auch zuvor die Anbringung eines Arbeitsgerätes hauptsächlich im Hinblick auf das Vorderwagenteil erläutert worden ist, so kann ein Arbeitsgerät ohne weiteres auch in der beschriebenen Weise an dem Hinterwagenteil angebracht werden. Bevorzugt ist jedoch, wie dies nachstehend auch noch im einzelnen erläutert ist, das an dem Hinterwagenteil eine gesamte Arbeitseinheit angebracht, bzw. von dem Hinterwagenteil aufgenommen wird.

Nachstehend ist die Erfindung noch - jedoch lediglich beispielhaft - anhand von Ausführungsbeispielen, die auf der beigefügten Zeichnung dargestellt sind, im einzelnen erläutert. Auf dieser Zeichnung zeigt:
- Fig. 1: eine Seitenansicht eines erfindungsgemäßen Universalarbeitsfahrzeuges;
- Fig. 2: eine Draufsicht auf das Fahrzeug gemäß Fig. 1;
- Fig. 3: eine Draufsicht auf ein erfindungsgemäßes Universalarbeitsfahrzeug, wobei die Fahrerkabine und die Fahrerzentrale jeweils in drei verschiedenen Positionen dargestellt sind;
- Fig. 4: eine Seitenansicht eines erfindungsgemäßen Universalarbeitsfahrzeuges zusammen mit einem auf dem Hänger aufnehmbaren Arbeitsgerät;
- Fig. 5: eine Seitenansicht eines erfindungsgemäßen Universalarbeitsfahrzeuges mit Tandemachsanordnung zusammen mit einem zum Beispiel aufgebauten Montagekontainer.

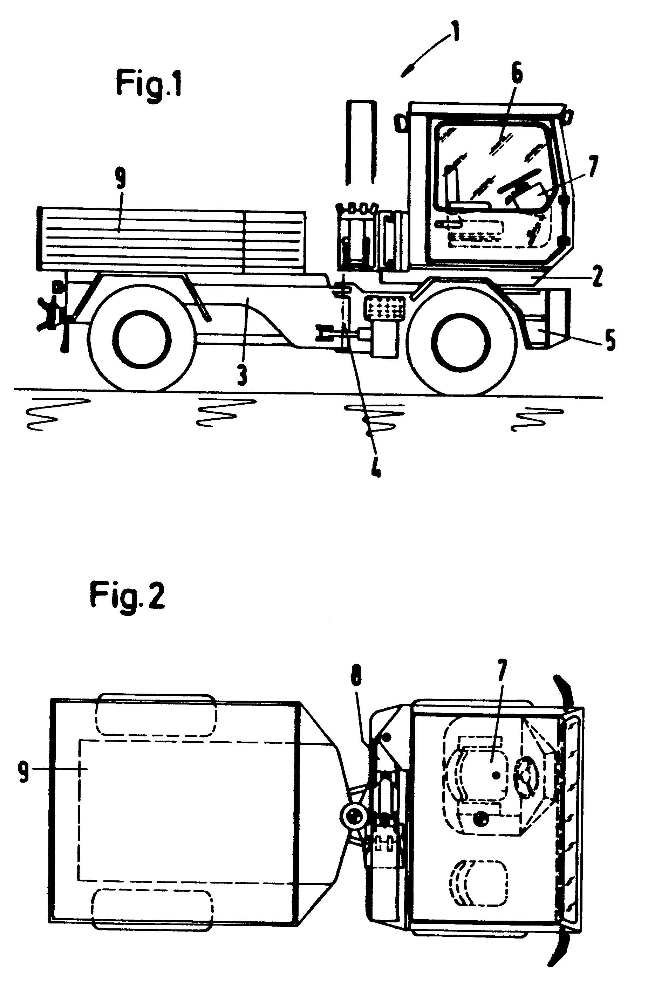

Dargestellt ist im einzelnen, in Fig. 1, zunächst ein Universalarbeitsfahrzeug 1, welches aus einem Vorderwagenteil 2 und einem Hinterwagenteil 3 besteht, die über ein Knickgelenk 4 miteinander verbunden sind.

Das Vorderwagenteil 2 besteht im einzelnen aus einem Chassis 5 und einer drehbar auf dem Chassis 5 angebrachten Fahrerkabine 6. In der Fahrerkabine 6 befindet sich eine Fahrerzentrale 7 (vgl. auch Fig. 2), die innerhalb der Fahrerkabine 6 um 180° drehbar ist, während die Fahrerkabine 6 gegenüber dem Chassis 5 um bis zu 400° drehbar ist.

Die Fahrerzentrale 7 weist alle Fahr-,Bedien-,und Kontrollelemente auf und ist als solche insgesamt um die erwähnten 180° drehbar.

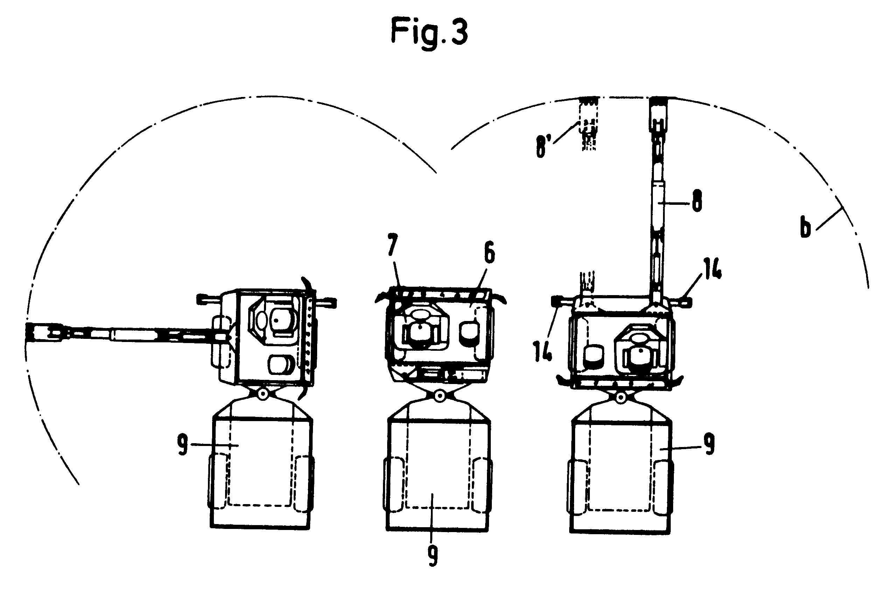

Wie insbesondere Fig. 2 zu entnehmen ist, befindet sich im Normalzustand eine Arbeitsgerätschaft 8 hinten an der Fahrerkabine 6, an welcher sie fest anbringbar ist (vgl. hierzu auch Fig. 1). Im normalen Straßenfahrbetrieb kann das Arbeitsgerät 8 so die Sicht nach vorne nicht behindern. Die Lagerung und Halterung der Arbeitsgerätschaft 8 ist im übrigen so getroffen, daß die Arbeitsgegerätschaft 8 um 180° schwenkbar und stufenlos seitlich verstellbar ist, wie sich bspw. aus Fig. 3, rechte Darstellung ergibt.

Bei seitlich auszuführenden Arbeiten ermöglicht dies zur Erzielung unterschiedlicher Arbeitsabstände von dem Fahrzeug, die Arbeitsgerätschaft 8 jeweils angepaßt zu verschieben. Bei der in den Fig. 1 bis 3 dargestellten Ausführungsform weist das Universalarbeitsfahrzeug 1 im übrigen noch eine Ladepritsche 9 auf.

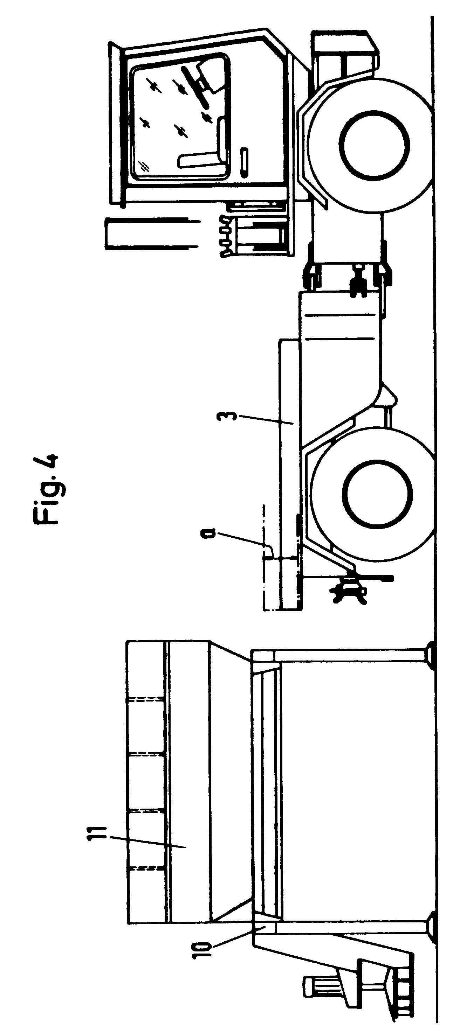

Das Antriebsteil 2 und das Hängerteil 3 sind hydropneumatisch gefedert. Neben einem hohen Fahrkomfort auch auf holprigem Gelände ist dies insbesondere mit dem Vorteil verbunden, daß in einfacher Weise Arbeitsgeräte 8 adaptiert werden können. Dies ist bspw. in Fig. 4 verdeutlicht. Das Hängerteil 3 wird bspw. um das Maß a abgesenkt, sodaß unter ein Gestell 10 gefahren werden kann, auf welchem sich bei den dargestellten Ausführungsbeispiel ein Silo-Streuautomat 11 befindet. Nachdem das Universalarbeitsfahrzeug 1 mit dem Hängerteil 3 unter das Gestell 10 gefahren ist, wird das Hängerteil 3 wieder angehoben, dadurch der Silo-Streuautomat 11 aufgenommen. Das aufgenommene Gerät kann dann verriegelt werden, die elektrischen und sonstigen Verbindungen hergestellt werden, Stützfüße beigeklappt werden und das Fahrzeug-Niveau sodann wieder in Normallage geregelt werden.

Nicht dargestellt ist, wie aber eingangs ausführlich beschrieben, daß das Universalarbeitsfahrzeug 1 über einen hydrostatischen Antrieb verfügt, der mit einem gekappselten Dieselmotor mit einer Leistung von bspw. 74 PS gekoppelt ist. Dieser Antrieb ermöglicht eine stufenlose Geschwindigkeitsregelung, unabhängig von der Drehzahl des Dieselmotors. Eine optimale Anpassung an die jeweilig durchzuführenden Arbeiten ist erreichbar.

Der Motor ist schallgebremst, wodurch sich optimale Schallbedingungen ergeben. Ein Arbeiten in Wohgebieten ohne behördliche Auflagen ist möglich.

Die Darstellung gemäß Fig. 3 verdeutlicht den großen Wirkungsbereich und die optimale Bedienbarkeit eines Universalarbeitsfahrzeuges 1. Bei der mittleren Darstellung befindet sich das Universalarbeitsfahrzeug 1 in seiner Normalstellung, etwa also für normalen Fahrbetrieb.

Bei der rechten Darstellung in. Fig. 3 ist die Fahrerkabine 6 um 180° geschwenkt worden und desgleichen auch die Fahrerzentrale 7. Der als Arbeitsgerät 8 bspw. verwendete Schaufelbagger besitzt so den mit der strichpunktierten Linie b angedeuteten Wirkungskreis, der sich entsprechend, bei nicht gedrehter Fahrerkabine 6, auch nach hinten (im Bezug auf die Fahrtrichtung) fortsetzt. Die Verschiebbarkeit der Arbeitsgerätschaft 8 ist durch die Darstellung 8ʹ angedeutet.

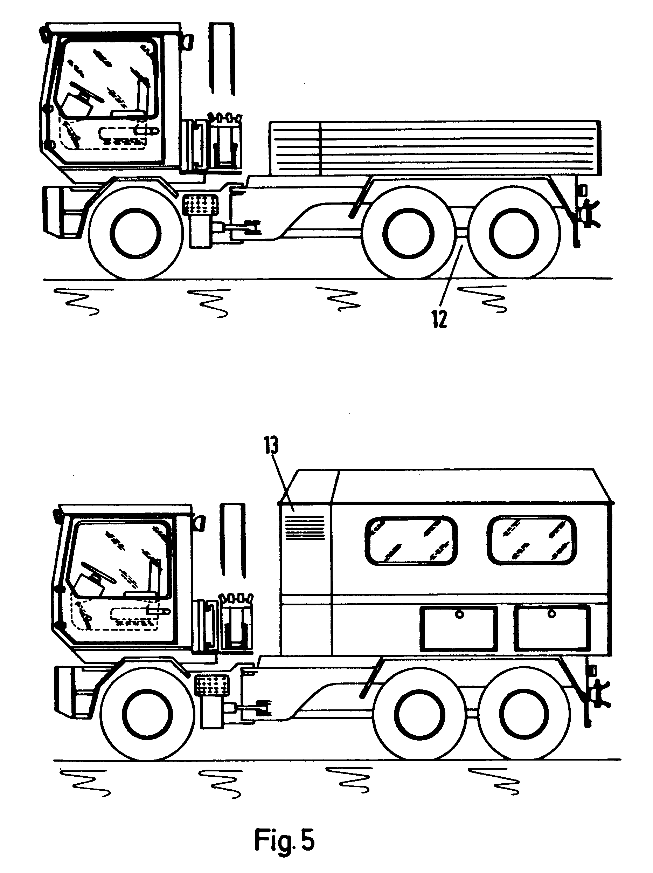

In Fig. 5 der Zeichnung ist ein Universalarbeitsfahrzeug mit einer Tandemachsanordnung 12 dargestellt. Auf der unteren Darstellung in Fig. 5 befindet sich auf dem Hinterwagenteil ein Montagekontainer 13.

Wie im übrigen insbesondere aus Fig. 3 noch ersichtlich, verfügt das Universalarbeitsgerät auch über Stützfüße 14, um bei bestimmten, örtlich gebundenen Einsätzen eine optimale Abstützung zu ergeben.

Bei der in Fig. 3 linken Darstellung ist die Möglichkeit des seitlichen Arbeitens verdeutlicht, wobei die Fahrerkabine 6 um 90° und die Fahrerzentrale 7 um 180° gedreht ist.

Als Arbeitsgeräte 8 können bei dem beschriebenen Universalarbeitsfahrzeug 1 die unterschiedlichsten Arbeitsgeräte zur Anwendung kommen. Erwähnt seien beispielhaft lediglich ein Löffelbagger, ein Zweischalengreifer, ein Grabenprofil-Löffel, ein Aufreißzahn, ein Lasthaken, ein Grabenreinigungslöffel, eine Ladegabel, ein Erdbohrer, ein Hydraulikhammer, eine Ausleger-Schneefräse, ein Doppelmesser-Mähbalken, ein Ausleger-Mähwerk, etwa zum Mähen einer Böschung, eine Rüttelplatte, ein Erdschieber, eine Front-Seilwinde, ein Keil-Schneepflug, eine Seiten-Schneeschleuder, eine Fräs-Schneeschleuder, eine Vorbau-Kehrmaschine oder dergleichen mehr.

Bei der beschriebenen Konzeption können verschiedene Adaptionen (verschiedene Arbeitsgeräte) gleichzeitig zum Arbeitseinsatz mitgenommen werden und je nach den durchzuführenden Arbeitsschritten zur Anwendung kommen. Die Möglichkeit, vorhandene, auf dem Markt befindliche Arbeitsgeräte anzubringen, ist gegeben, insbesondere aufgrund der bereits erläuterten Vorteile der schnellen Adaption durch die hydropneumatische Federung.

Die in der vorstehenden Beschreibung, den Ansprüchen und der Zeichnung offenbarten Merkmale der Erfindung können sowohl einzeln als auch in beliebiger Kombination für die Verwirklichung der Erfindung von Bedeutung sein.

### BEZUGSZEICHENLISTE

- 1: Universalarbeitsfahrzeug
- 2: Vorderwagenteil
- 3: Hinterwagenteil
- 4: Knickgelenk
- 5: Chassis
- 6: Fahrerkabine
- 7: Fahrerzentrale
- 8: Arbeitsgerät
- 9: Ladepritsche
- 10: Gestell
- 11: Silo-Streuautomat
- 12: Tandemachsanordnung
- 13: Montagekontainer
- 14: Stützfüße
- a: Maß
- b: Linie

## Patentansprüche

1. Universalarbeitsfahrzeug mit einem Vorderwagenteil (2) und einem Hinterwagenteil (3), wobei zumindest an dem Vorderwagenteil (2) ein Arbeitsgerät (8) anbringbar ist, und wobei das Vorderwagenteil (2) eine drehbare Fahrerkabine (6) aufweist, dadurch gekennzeichnet, daß das Arbeitsgerät (8) an der Fahrerkabine (6) anbringbar ist, und daß eine in der Fahrerkabine (6) befindliche Fahrerzentrale (7) relativ zu der Fahrerkabine (6) drehbar ist.

2. Universalarbeitsfahrzeug nach Anspruch 1, dadurch gekennzeichnet, daß das Vorderwagenteil (2) und das Hinterwagenteil, (3) über ein Knickgelenk (4) miteinander verbunder sind.

3. Universalarbeitsfahrzeug, insbesondere nach einem der Ansprüche 1 oder 2, dadurch gekennzeichnet, daß die Aufnahme eines Arbeitsgerätes (8) auf dem Vorderwagenteil (2) und/oder dem Hinterwagenteil (3) durch eine Absenkung und Wiederanhebung durchführbar ist.

4. Universalarbeitsfahrzeug nach einem der Ansprüche 1 bis 3, durch gekennzeichnet, daß das Vorderwagenteil (2) und/oder das Hinterwagenteil (3) hydropneumatisch gefedert sind.

5. Universalarbeitsfahrzeug nach einem der Ansprüche 1 bis 4, gekennzeichnet durch einen hydrostatischen Antrieb.

6. Universalarbeitsfahrzeug nach Anspruch 5, dadurch gekennzeichnet, daß ein Dieselmotor, der hydrostatische Antrieb (Achsialkolbenantrieb) und ein Lastschaltgetriebe im Hinterwagenteil (3) angeordnet sind.

7. Universalarbeitsfahrzeug nach einem der Ansprüche 1 bis 6, dadurch gekennzeichnet, daß das Arbeitsgerät (8) an der Fahrerkabine (6) um 180° schwenkbar und seitlich verschiebbar anbringbar ist.

8. Universalarbeitsfahrzeug nach einem der Ansprüche 1 bis 7, dadurch gekennzeichnet, daß die Fahrerkabine (6) um ca. 400° drehbar ist.

9. Universalarbeitsfahrzeug nach einem der Ansprüche 1 bis 8, dadurch gekennzeichnet, daß die Fahrerzentrale (7) um 180° drehbar ist.

10. Universalarbeitsfahrzeug nach einem der Ansprüche 1 bis 9, dadurch gekennzeichnet, daß auf dem Hinterwagenteil (3) eine Ladepritsche (9), ein Silo-Streuautomat (11) oder ein Montagecontainer (13) angeordnet sind.

## Claims

1. All-purpose utility vehicle with a vehicle front part (2) and a vehicle rear part (3), a tool (8) being installable at least on the vehicle front part (2) and the vehicle front part (2) having a rotatable driver's cabin (6), characterized in that the tool (8) is installable on the driver's cabin (6) and in that a central driver's station (7) located in the driver's cabin is rotatable in relation to the driver's cabin (6).

2. All-purpose utility vehicle according to claim 1, characterized in that the vehicle front part (2) and the vehicle rear part (3) are connected with each other by way of an articulated link (4).

3. All-purpose utility vehicle, in particular according to one of the claims 1 or 2, characterized in that the reception of a tool (8) on the vehicle front part (2) and/or on the vehicle rear part (3) is performable by lowering and re-elevation.

4. All-purpose utility vehicle according to one of the claims 1 to 3, characterized in that the vehicle front part (2) and /or the vehicle rear part (3) are hydropneumatically spring-born.

5. All-purpose utility vehicle according to one of the claims 1 to 4, characterized by a hydrostatic drive.

6. All-purpose utility vehicle according to claim 5, characterized in that a Diesel engine, the hydrostatic drive (axial piston drive) and a control gear working under load are arranged in the vehicle rear part (3).

7. All-purpose utility vehicle according to one of the claims 1 to 6, characterized in that the tool (8) is installable on the driver's cabin (6) to be pivotable by 180° and laterally displaceable.

8. All-purpose utility vehicle according to one of the claims 1 to 7, characterized in that the driver's cabin (6) is rotatable by about 400°.

9. All-purpose utility vehicle according to one of the claims 1 to 8, characterized in that the central driver's station (7) is rotatable by 180°.

10. All-purpose utility vehicle according to one of the claims 1 to 9, characterized in that a loading platform (9), an automatic silo gritter (11) or a mounting container (13) are arranged on the vehicle rear part (3).

## Revendications

1. Véhicule utilitaire universel avec un devant-train (2) et un arrière-train (3), un outillage étant installable du moins sur le devant-train (2), et le devant-train (2) présentant une cabine rotative de chauffeur (6), caractérisé en ce que l'outillage (8) est installable sur la cabine de chauffeur (6) et en ce qu'une centrale de chauffeur (7) située dans la cabine de chauffeur (6) est rotative relativement à la cabine de chauffeur (6).

2. Véhicule utilitaire universel selon la revendication 1, caractérisé en ce que le devant-train (2) et l'arrière-train (3) sont raccordés l'un avec l'autre par un joint articulé (4).

3. Véhicule utilitaire universel, en particulier selon une des revendications 1 ou 2, caractérisé en ce que la réception d'un outillage (8) sur le devant-train (2) et/ou sur l'arrière-train (3) est réalisable par déscente et relèvement.

4. Véhicule utilitaire universel selon une des revendications 1 à 3, caractérisé en ce que le devant-train (2) et/ou l'arrière-train (3) sont à ressorts hydropneumatiques.

5. Véhicule utilitaire universel selon une des revendications 1 à 4 caractérisé par une commande hydrostatique.

6. Véhicule utilitaire universel selon la revendication 5, caractérisé en ce qu'un moteur Diesel, la commande hydrostatique (commande à piston axial) et un engrenage de manoeuvre sous charge sont arrangés dans l'arrière-train (3).

7. Véhicule utilitaire universel selon une des revendications 1 à 6, caractérisé en ce que l'outillage (8) est arrangeable à la cabine de chauffeur (6) de facon orientable de 180° et latéralement déplacable.

8. Véhicule utilitaire universel selon une des revendications 1 à 7, caractérisé en ce que la cabine de chauffeur (6) est rotative d'environ 400°.

9. Véhicule utilitaire universel selon une des revendications 1 à 8, caractérisé en ce que la centrale de chauffeur (7) est rotative de 180°.

10. Véhicule utilitaire universel selon une des revendications 1 à 9, caractérisé en ce qu'une palette (9), un automate de répandage en silo (11) ou un conteneur de montage (13) sont arrangés sur l'arrière-train (3).
